# EUROPÄISCHE PATENTANMELDUNG

(11) **EP 0 915 207 A2**
(43) Veröffentlichungstag der Anmeldung: **12.05.1999**
(21) Anmeldenummer: 98119133.1
(22) Anmeldetag: 09.10.1998
(51) Int. Cl.: E02F 3/40, E02F 3/36

(54) **Hoflader**

(30) Priorität: 09.10.1997 DE 29718705 U
(71) Anmelder: Gerhard Krüger GmbH Maschinenfabrik, 87668 Rieden (DE)
(72) Erfinder: Die Erfindernennung liegt noch nicht vor
(74) Vertreter: Kern, Ralf M., Dipl.-Ing.

(57) **Zusammenfassung**

Hoflader bestehend aus einem Fahrzeug (1) mit einem hydraulischen Ladearm (2), an welchem ein schwenkbares Werkzeug (3) mit schwenkbarem Niederhalter (4) befestigt ist, wobei an dem Ladearm (2) eine Schnellwechsel-Anbauplatte (5) schwenkbar befestigt ist, das Werkzeug (3) an der Schnellwechsel-Anbauplatte (5) leicht lösbar befestigt ist und an der oberen Kante der Schnellwechselplatte (5) getrennt vom Werkzeug der Niederhalter (4) schwenkbar befestigt ist.

## Beschreibung

Die Erfindung betrifft einen Hoflader bestehend aus einem Fahrzeug mit einem hydraulischen Ladearm, an welchem ein schwenkbares Werkzeug mit schwenkbarem Niederhalter befestigt ist.

Solche Hoflader sind bereits bekannt. Bei den bekannten Hofladern ist der Niederhalter direkt am Werkzeug befestigt, wobei von dem Niederhalter mit dem daran befestigten Werkzeug Hydraulikschläuche zum Ladearm führen. Soll nun das Werkzeug, welches eine Schaufel, eine Gabel oder eine Platte zum Stapeln sein kann, ausgewechselt werden, so wird der daran schwenkbar befestigte Niederhalter mit ausgewechselt, und die Hydraulikschläuche, die zum Ladearm führen, müssen ab- und angesteckt werden.

Hierdurch ergibt sich eine Auswechselzeit für das Werkzeug von ca. einer Viertelstunde, was die Arbeit mit dem Hoflader sehr behindert.

Aufgabe der vorliegenden Neuerung ist es, einen Hoflader bereitzustellen, bei dem das Werkzeug in sehr kurzer Zeit ausgewechselt werden kann.

Diese Aufgabe wird dadurch gelöst, daß an dem Ladearm eine Schnellwechsel-Anbauplatte schwenkbar befestigt ist, das Werkzeug an der Schnellwechsel-Anbauplatte leicht lösbar befestigt ist und an der oberen Kante der SchnellwechselAnbauplatte getrennt vom Werkzeug der Niederhalter schwenkbar befestigt ist.

Dadurch, daß der Niederhalter schwenkbar an der Schnellwechsel-Anbauplatte befestigt ist und auch beim Werkzeugwechsel an der Schnellwechsel-Anbauplatte befestigt bleibt, müssen keine hydraulischen Schlauche ab- und angesteckt werden. Die Auswechselzeit für das Werkzeug beträgt somit nur noch ca. 60 Sekunden.

Vorzugsweise ist zwischen der oberen Kante der Schnellwechsel-Anbauplatte und der der Schnellwechsel-Anbauplatte abgewandten Kante des Niederhalters ein Hydraulikzylinder zum Verschwenken des Niederhalters vorgesehen.

Weiterhin vorzugsweise ist an der der Schnellwechselplatte abgewandten Kante des Niederhalters eine Vielzahl von Zinkenhalterungen zum Einsetzen von Zinken vorgesehen.

Fernerhin vorzugsweise ist folgendes vorgesehen: Erste Einrichtungen an der Schnellwechsel-Anbauplatte, Einrichtungen am Werkzeug, wobei die Einrichtungen am Werkzeug an den ersten Einrichtungen an der Schnellwechsel-Anbauplatte einrastbar sind, und Einrichtungen am Ladearm, welche die Schnellwechsel-Anbauplatte und das Werkzeug lösbar an deren Oberkanten zusammenhalten.

Bevorzugt sind die ersten Einrichtungen an der Schnellwechsel-Anbauplatte in der Nähe der Unterkante der Schnellwechsel-Anbauplatte angeordnet.

Weiterhin bevorzugt beträgt die Zahl der ersten Einrichtungen an der Schnellwechsel-Anbauplatte zwei.

Fernerhin bevorzugt sind die ersten Einrichtungen an der Schnellwechsel-Anbauplatte rechteckige Löcher und die Einrichtungen am Werkzeug abgewinkelte Vorsprünge.

Vorzugsweise ist an der Schnellwechsel-Anbauplatte eine zweite Einrichtung vorgesehen, mit Hilfe derer die Schnellwechsel-Anbauplatte am Ladearm schwenkbar gelagert ist.

Weiterhin vorzugsweise ist die zweite Einrichtung an der Schnellwechsel-Anbauplatte auf der Höhe von einem Drittel der Schnellwechsel-Anbauplatte ausgehend von der Unterkante der Schnellwechsel-Anbauplatte angeordnet.

Fernerhin vorzugsweise besteht die zweite Einrichtung an der Schnellwechsel-Anbauplatte aus zwei gelochten Ansatzstücken jeweils an einem seitlichen Rand der Schnellwechsel-Anbauplatte, die eine Welle halten, welche durch einen Bolzen gesichert ist, wobei der Ladearm an der Welle befestigt ist.

Bevorzugt weist der Ladearm eine bis mehrere Teleskopstangen auf, welche durch einen Hydraulikzylinder ein- und ausgefahren werden, und weist die Schnellwechsel-Anbauplatte entsprechend der Zahl der Teleskopstangen eine Anzahl von dritten Einrichtungen auf, in welchen die Enden der Teleskopstangen befestigt sind, wobei die Teleskopstangen die Schnellwechsel-Anbauplatte, welche an der zweiten Einrichtung schwenkbar gelagert ist, verschwenken.

Weiterhin vorzugsweise sind die dritten Einrichtungen an der Schnellwechsel-Anbauplatte auf der Höhe von einem Drittel der Tiefe der Schnellwechsel-Anbauplatte von der oberen Kante der Schnellwechsel-Anbauplatte angeordnet.

Bevorzugt weist der Ladearm vier Teleskopstangen auf, und sind an der Schnellwechsel-Anbauplatte vier dritte Einrichtungen angeordnet, wobei je zwei dritte Einrichtungen paarweise angeordnet sind.

Weiterhin bevorzugt sind an der Schnellwechsel-Anbauplatte in ihrer Mitte am oberen Rand vier schräg nach innen/oben verlaufende gelochte Ansatzstücke und an der von der Schnellwechsel-Anbauplatte abgewandten Kante des Niederhalters zwei gelochte Ansatzstücke vorgesehen, wobei der Hydraulikzylinder zwischen den beiden Ansatzstücken der Schnellwechsel-Anbauplatte und den beiden Ansatzstücken des Niederhalters befestigt ist und den Niederhalter verschwenkt.

Vorzugsweise bestehen die Zinkenhalterungen aus Bügeln, in die die nach hinten durch jeweils einen Block gesicherten Zinken passgenau eingefügt sind.

Weiterhin vorzugsweise bildet die Schnellwechsel-Anbauplatte die lösbar am Rest des Werkzeugs befestigte Rückwand des Werkzeugs.

Die Neuerung wird nunmehr anhand der Figuren durch ein besonders bevorzugtes Ausführungsbeispiel beschrieben, wobei die Figuren folgendes zeigen:
Figur 1 eine Seitenansicht des Hofladers mit verschiedenen Zuständen des Ladearms,
Figur 2 eine räumliche Darstellung der Schnellwechsel-Anbauplatte mit dem schwenkbar daran befestigten Niederhalter,
Figur 3 eine Seitenansicht der Schnellwechselplatte mit dem daran schwenkbar befestigtem Niederhalter, und
Figur 4 eine Draufsicht auf den teilweise abgebrochenen Niederhalter.

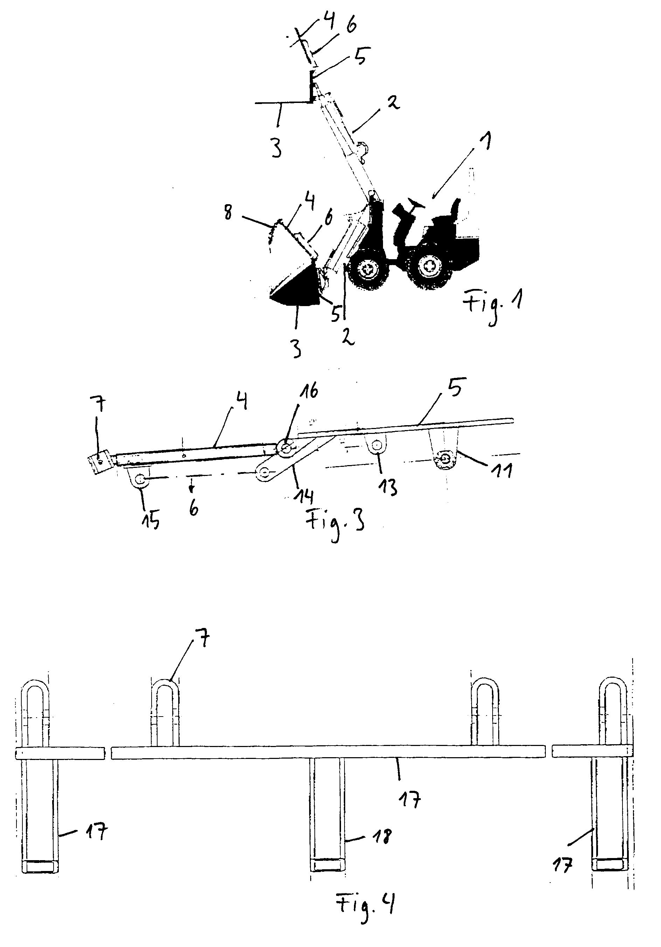

In Figur 1 ist das Fahrzeug 1 dargestellt, das mit dem Ladearm 2 versehen ist, der ausfahrbar und verschwenkbar ist. In Figur 1 sind zwei Positionen des Ladearms dargestellt. Einmal der nach oben verschwenkte Ladearm, der ausgefahren ist und zum anderen der nach unten verschwenkte Ladearm, der zusammengefahren ist. An dem Ladearm befindet sich schwenkbar die Schnellwechsel-Anbauplatte 5, mit dem schwenkbar daran befestigten Niederhalter 4, wobei zwischen Schnellwechsel-Anbauplatte an ihrer oberen Kante und der der Schnellwechsel-Anbauplatte abgewandten Kante des Niederhalters ein Hydraulikzylinder 6 vorgesehen ist. Das Werkzeug 3, das im Falle der Abbildung 1 eine Schaufel ist, ist lösbar an der Schnellwechsel-Anbauplatte befestigt. An der der Schnellwechsel-Anbauplatte abgewandten Kante des Niederhalters befinden sich Zinken 8, welche Heu oder Silage greifen können.

In Abbildung 2 ist die Schnellwechsel-Anbauplatte 5 und der daran schwenkbar angebrachte Niederhalter 4 räumlich dargestellt. In der Schnellwechsel-Anbauplatte befinden sich an deren unteren Rand zwei rechteckige Löcher 9, in die gewinkelte Vorsprünge des Werkzeugs eingreifen.

Ebenfalls auf der Figur 2 zu erkennen sind Ansatzstücke 11 mit Löchern, die eine Welle 12 zwischen sich tragen, die durch einen Bolzen gesichert ist. An die Welle 12 ist der Ladearm beispielsweise angeschweißt. Ebenfalls auf der Schnellwechselplatte 5 befinden sich gelochte Ansatzstücke 13, und zwar vier Stück jeweils paarweise angeordnet, an denen vier Teleskopstangen des Ladearms befestigt sind und die an der Welle 12 gelagerte Schnellwechsel-Anbauplatte verschwenken.

Der Niederhalter 4 ist an der oberen Kante der Schnellwechsel-Anbauplatte durch zwei Scharniere 16 schwenkbar gelagert. An der oberen Kante der Schnellwechsel-Anbauplatte befinden sich zwei schräg nach innen/oben verlaufende gelochte Ansatzstücke 14 und an der der Schnellwechsel-Anbauplatte abgewandten Kante des Niederhalters 4 befinden sich zwei gelochte Ansatzstücke 15, wobei zwischen den gelochten Ansatzstücken 14 und den gelochten Ansatzstücken 15 ein Hydraulikzylinder befestigt ist, der den Niederhalter 4 verschwenkt. Der Niederhalter besteht aus einem Rahmen 17 und drei Längsträgern 18.

In Figur 3 befindet sich rechts die Schnellwechsel-Anbauplatte mit den gelochten Ansatzstücken 11 und den gelochten Ansatzstücken 13 sowie den schräg nach innen/oben verlaufenden gelochten Ansatzstücken 14. Ebenfalls dargestellt sind die Scharniere 16, mit denen der Niederhalter 4 an der Schnellwechsel-Anbauplatte 5 schwenkbar gelagert ist. Am Niederhalter 4 befinden sich gelochte Ansatzstücke 15, wobei zwischen den gelochten Ansatzstücken 14 der Schnellwechsel-Anbauplatte und den gelochten Ansatzstücken 15 des Niederhalters der Hydraulikzylinder 6 befestigt ist. An der linken Kante des Niederhalters befindet sich die Zinkenhalterung 7.

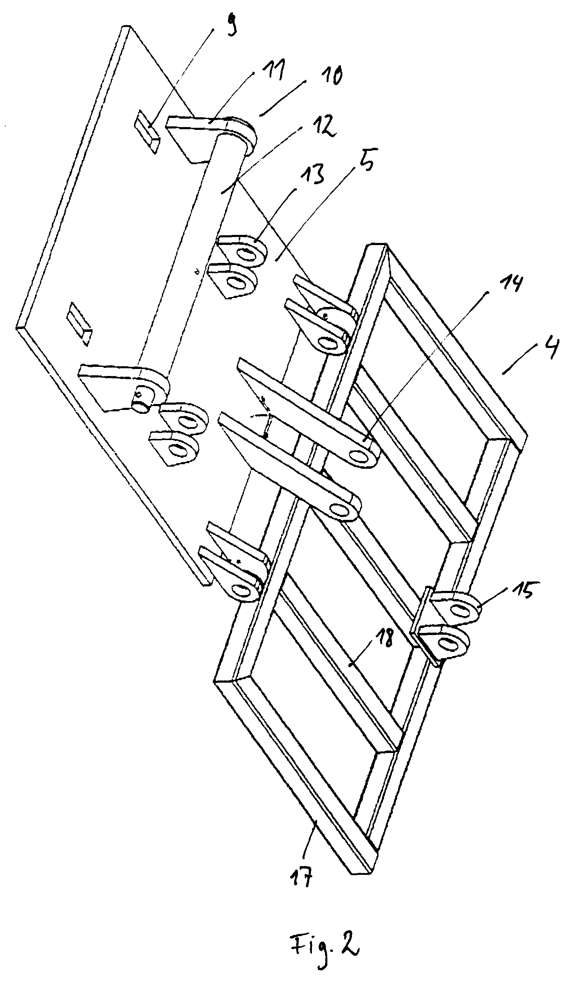

In Figur 4 ist die der Schnellwechsel-Anbauplatte abgewandte Kante des Niederhalters 4 zu erkennen, wobei an dieser Kante bügelförmige Zinkenhalterungen 7 angeordnet sind. Die Zinken werden passgenau in die Bügel eingeschoben, wobei die Zinken hinten jeweils durch einen Block gesichert sind. Ebenfalls zu erkennen in Figur 4 sind Teile des Rahmens 17 und ein Längsträger 18.

Der Niederhalter bildet, wenn er nach oben verschwenkt ist, auch einen Fahrerschutz.

### Bezugszeichenliste

- 1: Fahrzeug
- 2: Ladearm
- 3: Werkzeug
- 4: Niederhalter
- 5: Schnellwechsel-Anbauplatte
- 6: Hydraulikzylinder
- 7: Zinkenhalterung
- 8: Zinken
- 9: rechteckige Löcher
- 10: erste Einrichtung an der Schnellwechsel-Anbauplatte
- 11: gelochte Ansatzstücke
- 12: Welle
- 13: gelochte Ansatzstücke
- 14: gelochte Ansatzstücke
- 15: gelochte Ansatzstücke
- 16: Scharniere
- 17: Rahmen des Niederhalters
- 18: Längsstreben des Niederhalters

## Patentansprüche

1. Hoflader bestehend aus einem Fahrzeug (1) mit einem hydraulischen Ladearm (2), an welchem ein schwenkbares Werkzeug (3) mit schwenkbarem Niederhalter (4) befestigt ist, dadurch gekennzeichnet, daß an dem Ladearm (2) eine Schnellwechsel-Anbauplatte (5) schwenkbar befestigt ist, das Werkzeug (3) an der Schnellwechsel-Anbauplatte (5) leicht lösbar befestigt ist und an der oberen Kante der Schnellwechselplatte (5) getrennt vom Werkzeug (3) der Niederhalter (4) schwenkbar befestigt ist.

2. Hoflader nach Anspruch 1, dadurch gekennzeichnet, daß zwischen der oberen Kante der Schnellwechsel-Anbauplatte (5) und der der Schnellwechsel-Anbauplatte (5) abgewandten Kante des Niederhalters (4) ein Hydraulikzylinder (6) zum Schwenken des Niederhalters (4) vorgesehen ist.

3. Hoflader nach Anspruch 1 oder 2, dadurch gekennzeichnet, daß an der der Schnellwechselplatte (5) abgewandten Kante des Niederhalters (4) eine Vielzahl von Zinkenhalterungen (7) zum Einsetzen von Zinken (8) vorgesehen ist.

4. Hoflader nach einem der Ansprüche 1 bis 3, gekennzeichnet durch erste Einrichtungen (9) an der Schnellwechsel-Anbauplatte (5) und Einrichtungen am Werkzeug (3), wobei die Einrichtungen am Werkzeug (3) an den ersten Einrichtungen (9) an der Schnellwechsel-Anbauplatte (5) einrastbar sind und Einrichtungen am Ladearm, welche die Schnellwechsel-Anbauplatte (5) und das Werkzeug (3) lösbar an deren Oberkanten zusammenhalten.

5. Hoflader nach Anspruch 4, dadurch gekennzeichnet, daß die ersten Einrichtungen (9) in der Schnellwechsel-Anbauplatte (5) in der Nähe der Unterkante der Schnellwechsel-Anbauplatte (5) angeordnet sind.

6. Hoflader nach Anspruch 4 oder 5, dadurch gekennzeichnet, daß die Zahl der ersten Einrichtungen (9) an der Schnellwechsel-Anbauplatte (5) zwei beträgt.

7. Hoflader nach einem der Ansprüche 4 bis 6, dadurch gekennzeichnet, daß die ersten Einrichtungen (9) an der Schnellwechsel-Anbauplatte (5) rechteckige Löcher sind und die Einrichtungen am Werkzeug (3) abgewinkelte Vorsprünge sind.

8. Hoflader nach einem der Ansprüche 4 bis 7, dadurch gekennzeichnet, daß an der Schnellwechsel-Anbauplatte (5) eine zweite Einrichtung (10) vorgesehen ist, mit Hilfe derer die Schnellwechsel-Anbauplatte (5) am Ladearm (2) schwenkbar gelagert ist.

9. Hoflader nach Anspruch 8, dadurch gekennzeichnet, daß die zweite Einrichtung (10) an der Schnellwechsel-Anbauplatte (5) auf der Höhe von einem Drittel der Tiefe der Schnellwechsel-Anbauplatte (5) ausgehend von der Unterkante der Schnellwechsel-Anbauplatte (5) angeordnet ist.

10. Hoflader nach Anspruch 8 oder 9, dadurch gekennzeichnet, daß die zweite Einrichtung (10) an der Schnellwechsel-Anbauplatte (5) aus zwei gelochten Ansatzstücken (11) jeweils an einem seitlichen Rand der Schnellwechsel-Anbauplatte (5) besteht, die eine Welle (12) halten, welche durch einen Bolzen gesichert ist, wobei der Ladearm (2) an der Welle befestigt ist.

11. Hoflader nach einem der Ansprüche 8 bis 10, dadurch gekennzeichnet, daß der Ladearm (2) eine bis mehrere Teleskopstangen aufweist, welche durch einen Hydraulikzylinder ein- und ausgefahren werden, und die Schnellwechsel-Anbauplatte (5) entsprechend der Zahl der Teleskopstangen eine Anzahl von dritten Einrichtungen (13) aufweist, an welchen die Enden der Teleskopstangen befestigt sind, wobei die Teleskopstangen die Schnellwechsel-Anbauplatte (5), welche an der zweiten Einrichtung (10) schwenkbar gelagert ist, verschwenken.

12. Hoflader nach Anspruch 11, dadurch gekennzeichnet, daß die dritten Einrichtungen (13) an der Schnellwechsel-Anbauplatte (5) auf der Höhe von einem Drittel der Tiefe der Schnellwechsel-Anbauplatte (5) von der oberen Kante der Schnellwechsel-Anbauplatte (5) angeordnet sind.

13. Hoflader nach Anspruch 11 oder 12, dadurch gekennzeichnet, daß der Ladearm (2) vier Teleskopstangen aufweist, und an der Schnellwechsel-Anbauplatte (5) vier dritte Einrichtungen (13) angeordnet sind, wobei je zwei dritte Einrichtungen (13) paarweise angeordnet sind.

14. Hoflader nach einem der Ansprüche 11 bis 13, dadurch gekennzeichnet, daß an der Schnellwechsel-Anbauplatte (5) in ihrer Mitte am oberen Rand vier schräg nach innen/oben verlaufende gelochte Ansatzstücke (14) und an der von der Schnellwechsel-Anbauplatte (5) abgewandten Kante des Niederhalters (4) zwei gelochte Ansatzstücke (15) vorgesehen ist, wobei der Hydraulikzylinder (6) zwischen den beiden Ansatzstücken (14) der Schnellwechsel-Anbauplatte (5) und den beiden Ansatzstücken (15) des Niederhalters (4) befestigt ist und den Niederhalter (4) verschwenkt.

15. Hoflader nach einem der Ansprüche 3 bis 14, dadurch gekennzeichnet, daß die Zinkenhalterungen (7) aus Bügeln bestehen, in die die nach hinten durch jeweils einen Block gesicherten Zinken (8) passend genau eingefügt sind.

16. Hoflader nach einem der Ansprüche 1 bis 3, dadurch gekennzeichnet, daß die Schnellwechsel-Anbauplatte (5) die lösbar am Rest des Werkzeugs (3) befestigte Rückwand des Werkzeugs (3) bildet.
